(19) Europäisches Patentamt / European Patent Office / Office européen des brevets

(11) **EP 4 637 250 A1**

(12) **EUROPEAN PATENT APPLICATION**
published in accordance with Art. 153(4) EPC

(43) Date of publication:
**22.10.2025 Bulletin 2025/43**

(21) Application number: **23923810.8**

(22) Date of filing: **29.11.2023**

(51) International Patent Classification (IPC):
**H04W 74/08** (2024.01)   **H04W 74/00** (2009.01)

(52) Cooperative Patent Classification (CPC):
**H04L 5/00; H04W 74/00; H04W 74/08;
H04W 74/0833**

(86) International application number:
**PCT/CN2023/135040**

(87) International publication number:
**WO 2024/174647 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.02.2023  CN 202310187906**

(71) Applicant: **Honor Device Co., Ltd.
Shenzhen, Guangdong 518040 (CN)**

(72) Inventor: **ZENG, Yongbo
Shenzhen, Guangdong 518040 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND COMMUNICATION APPARATUS**

(57)     A communication method and a communication apparatus are provided, which are applicable to the communication field. The method includes: determining, by an access network device, a random access transmission resource, where the random access transmission resource is used for a plurality of physical random access channel PRACH transmissions during a random access attempt, the random access transmission resource is related to a quantity of the PRACH transmissions, and each PRACH transmission includes at least one random access sequence; and sending the random access transmission resource through broadcasting. In embodiments of this application, a PRACH transmission resource structure is designed, so that a terminal device can perform a plurality of PRACH transmissions in a random access attempt, which improves a probability of random access.

FIG. 3

**Description**

This application claims priority to Chinese Patent Application No. 202310187906.8, filed with the China National Intellectual Property Administration on February 20, 2023 and entitled "COMMUNICATION METHOD AND COMMUNICATION APPARATUS", which is incorporated herein by reference in its entirety.

**TECHNICAL FIELD**

This application relates to the communication field, and in particular, to a communication method and a communication apparatus.

**BACKGROUND**

Currently, in a mobile communication system, a terminal needs to send a random access sequence to a network device in a random access process. A larger signal strength of the random access sequence received by the network device indicates a larger probability of successful random access of the terminal device.

In a scheme, the terminal device is allowed to repeatedly send a plurality of PRACH transmissions (PRACH transmission) during a random access attempt (Random access attempt). However, currently, a design of a resource structure for the plurality of PRACH transmissions has not been provided yet. Therefore, a scheme needs to be provided urgently to deal with a plurality of PRACH transmission mechanisms.

**SUMMARY**

In view of the above, this application provides a communication method, a communication apparatus, a computer-readable storage medium, and a computer program product, so that a terminal device can perform a plurality of PRACH transmissions in a random access attempt.

According to a first aspect, a communication method is provided. For example, the method may be performed by an access network device, or may be performed by a component (such as a circuit, a chip, or a chip system) configured in the access network device. This is not limited in this application.

Specifically, the communication method includes:

   determining a random access transmission resource, where the random access transmission resource is used for a plurality of physical random access channel PRACH transmissions during a random access attempt, the random access transmission resource is related to a quantity of the PRACH transmissions, and each PRACH transmission includes a transmission of one or more random access sequences; and
   sending the random access transmission resource.

Based on the foregoing technical solution, the access network device configures a resource structure applied to the plurality of PRACH transmissions and broadcasts the configured resource structure, so that the terminal device can send a plurality of random access signals in a random access attempt. In addition, by preconfiguring the resource structure applied to the plurality of PRACH transmissions, it is ensured that the access network device and the terminal device consistently understand the resource structure for the plurality of PRACH transmissions. In this way, when the terminal device subsequently sends a random access signal, the access network device may identify the random access signal sent by the same terminal device for a plurality of times, so as to combine and receive the plurality of PRACH transmissions during a random access attempt.

Optionally, the access network device sends the random access transmission resource through a broadcast message, for example, an SIB message.

In some possible implementations, the random access transmission resource includes a first random access transmission resource and a second random access transmission resource, the first random access transmission resource is used for a first transmission quantity of PRACH transmissions, and the second random access transmission resource is used for a second transmission quantity of PRACH transmissions.

In some possible implementations, the first transmission quantity corresponds to a first random access sequence, the second transmission quantity corresponds to a second random access sequence, and the first transmission quantity is different from the second transmission quantity.

In some possible implementations, the random access transmission resource includes a plurality of random access channel occasions ROs; and the plurality of ROs are a time-frequency resource set within a same PRACH period, or the plurality of ROs are a time-frequency resource set across different PRACH periods. Therefore, the plurality of ROs may be time-frequency resources of one or more PRACH periods, and may more flexibly support the plurality of PRACH transmissions.

In some possible implementations, the plurality of ROs are associated with one or more SSBs; when the plurality of ROs are time-frequency resources of different PRACH periods, different SSBs are mapped to ROs in different time domains and/or different frequency domains in different PRACH periods, or different SSBs are mapped to ROs in corresponding PRACH period resources having a same relative position in different PRACH periods.

In some possible implementations, the method further includes:

sending first indication information to a terminal device, where the first indication information is used for indicating that the terminal device is allowed to perform a plurality of PRACH transmissions on a transmission resource corresponding to a first random access preamble format, and a duration occupied by the transmission resource corresponding to the first random access preamble format in a time domain exceeds a preset duration. Therefore, the access network device may instruct the terminal device to perform the plurality of PRACH transmissions on the transmission resource corresponding to the first random access preamble format, thereby improving resource utilization.

Optionally, the access network device sends the first indication information through the broadcast message.

In some possible implementations, a random access sequence used by the terminal device during the plurality of PRACH transmissions is configured by the access network device. Therefore, the access network device may specify a random access sequence that is used by the terminal device to perform the plurality of PRACH transmissions. When the random access transmission resource is associated with the random access sequence, the access network device may learn resources on which the terminal device performs the plurality of PRACH transmissions.

According to a second aspect, a communication method is provided. For example, the method may be performed by a terminal device, or may be performed by a component (such as a circuit, a chip, or a chip system) configured in the terminal device. This is not limited in this application.

Specifically, the communication method includes:

obtaining a random access transmission resource, where the random access transmission resource is used for a plurality physical random access channel PRACH transmissions, the random access transmission resource is related to a quantity of the PRACH transmissions, and each PRACH transmission includes a transmission of one or more random access sequences; and the random access transmission resource includes a first random access transmission resource and a second random access transmission resource, the first random access transmission resource is used for a first transmission quantity of PRACH transmissions, and the second random access transmission resource is used for a second transmission quantity of PRACH transmissions;

measuring a signal quality strength of a downlink measurement signal, and determining that a quantity of the PRACH transmissions in a random access attempt is a first transmission quantity based on a measurement result; and

performing a plurality of PRACH transmissions on the first random access transmission resource based on the first transmission quantity.

Based on the foregoing technical solution, the terminal device obtains the resource structure configured by the access network device applied to the plurality of PRACH transmissions, so that a terminal device can send a plurality of random access signals in a random access attempt. In addition, by preconfiguring the resource structure applied to the plurality of PRACH transmissions, it is ensured that the access network device and the terminal device consistently understand the resource structure for the plurality of PRACH transmissions. In this way, when the terminal device subsequently sends a random access signal, the access network device may identify the random access signal sent by the same terminal device for a plurality of times, so as to combine and receive the plurality of PRACH transmissions during a random access attempt.

In some possible implementations, the first transmission quantity corresponds to a first random access sequence, the second transmission quantity corresponds to a second random access sequence, and the first transmission quantity is different from the second transmission quantity.

In some possible implementations, the performing a plurality of PRACH transmissions on the first random access transmission resource includes:

performing the plurality of PRACH transmissions on the first random access transmission resource by using the first random access sequence.

In some possible implementations, the first random access sequence used by the terminal device during the plurality of PRACH transmissions is configured by the access network device.

In some possible implementations, the first random access transmission resource includes a plurality of random access channel occasions ROs; and the plurality of ROs are time-frequency resources within a same PRACH period, or the plurality of ROs are time-frequency resources across different PRACH periods.

In some possible implementations, the method further includes:

receiving first indication information from the access network device, where the first indication information is used for indicating that the terminal device is allowed to perform a plurality of PRACH transmissions on a transmission resource corresponding to a first random access preamble format, and a duration occupied by the transmission resource corresponding to the first random access preamble format in a time domain exceeds a preset duration. Therefore, the terminal device may learn, by receiving the first indication information from the access network device, that the terminal device may perform the plurality of PRACH transmissions on the transmission resource corresponding to the first random access preamble format, thereby helping improve the resource utilization.

According to a third aspect, a communication apparatus is provided, including modules or units configured to perform the method in any one of the possible implementations of the foregoing first aspect and the second aspect.

In a design, the communication apparatus may include one-to-one corresponding modules that perform the methods/operations/steps/actions in the foregoing aspects. The module may be a hardware circuit, may be a software, or may be implemented by a hardware circuit in combination with software.

In a design, the communication apparatus is a communication chip. The communication chip may include an input circuit or interface configured to send a message or data, and an output circuit or interface configured to receive information or data.

In another design, the communication apparatus is a communication device. The communication device may include a transmitter configured to send a message or data, and a receiver configured to receive information or data.

In another design, the communication apparatus is configured to perform the method in any possible implementation of the foregoing first aspect. The communication apparatus may be configured in the foregoing terminal device, or the communication apparatus is a terminal device.

Alternatively, in another design, the communication apparatus is configured to perform the method in any possible implementation in the foregoing second aspect. The communication apparatus may be configured in the foregoing access network device, or the communication apparatus is an access network device.

According to a fourth aspect, a communication apparatus is provided, including a processor. The processor is coupled to a memory, and may be configured to execute instructions or data in the memory, to implement the method in any one of the possible implementations of the foregoing first aspect and the second aspect. Optionally, the communication apparatus further includes a memory. Optionally, the communication apparatus further includes a communication interface, and the processor is coupled to the communication interface.

In an implementation, the communication interface may be a transceiver or an input/output interface.

In another implementation, the communication apparatus is a chip configured in a terminal device. When the communication apparatus is a chip configured in the terminal device, the communication interface may be an input/output interface.

Alternatively, in another implementation, the communication apparatus is a chip configured in an access network device. When the communication apparatus is a chip configured in the access network device, the communication interface may be an input/output interface.

Optionally, the transceiver may be a transceiver circuit. Optionally, the input/output interface may be an input/output circuit.

According to a fifth aspect, a processor is provided, including an input circuit, an output circuit, and a processing circuit. The processing circuit is configured to receive a signal through the input circuit, and transmit a signal through the output circuit, so that the processor performs the method in any one of the possible implementations of the first aspect and the second aspect.

In a specific implementation process, the foregoing processor may be one or more chips, the input circuit may be an input pin, the output circuit may be an output pin, and the processing circuit may be a transistor, a gate circuit, a flip-flop, various logic circuits, and the like. An inputted signal received by the input circuit may be for example without limitation received and inputted by a receiver, a signal outputted by the output circuit may be for example without limitation outputted to and transmitted by a transmitter, and the input circuit and the output circuit may be a same circuit. The circuit is used as the input circuit and the output circuit at different moments. Specific implementations of the processor and various circuits are not limited in embodiments of this application.

According to a sixth aspect, a communication apparatus is provided, including a processor and a memory. The processor is configured to read instructions stored in the memory, receive a signal through a receiver, and transmit a signal through a transmitter, to perform the method in any one of the possible implementations of the first aspect and the second aspect.

Optionally, one or more processors are provided, and one or more memories are provided.

Optionally, the memory may be integrated with the processor, or the memory and the processor may be set separately.

In a specific implementation process, the memory may be a non-transitory (non-transitory) memory, such as a read only memory (read only memory, ROM). The memory and the processor may be integrated on a same chip, or may be respectively arranged on different chips. A type of the memory and a manner of disposing the memory and the processor are not limited in this embodiment of this application.

It should be understood that a related data exchange process, for example, sending indication information, may be a process of outputting indication information from the processor, and receiving capability information may be a process of receiving input capability information by the processor. Specifically, data outputted by the processor may be outputted to the transmitter, and input data received by the processor may be from the receiver. The transmitter and the receiver may be collectively referred to as a transceiver.

The processing apparatus in the foregoing sixth aspect may be one or more chips. The processor in the processing apparatus may be implemented through hardware, or may be implemented through software. When implemented through hardware, the processor may be a logic circuit, an integrated circuit, or the like. When being implemented through software, the processor may be a general-purpose processor, and is implemented by reading software code stored in a memory. The memory may be integrated into the processor, may be located outside the processor, and exists independently.

According to a seventh aspect, a computer program product is provided, including a computer program (which may also be referred to as code or an instruction). When the computer program is run, the computer is enabled to perform the method in any one of the possible implementations of the foregoing first aspect and the second aspect.

According to an eighth aspect, a computer-readable storage medium is provided. The computer-readable storage medium stores a computer program (which may also be referred to as code or an instruction). When the computer program runs on a computer, the computer is caused to perform the method according to any possible implementation of the foregoing first aspect and the second aspect.

According to a ninth aspect, an embodiment of this application provides a chip system. The chip system includes one or more processors, configured to invoke, from a memory, instructions stored in the memory and run the instructions, to cause the method according to any one of the foregoing aspects or the possible implementations of the aspects to be performed. The chip system may include a chip, or may include a chip and another discrete device.

The chip system may include an input circuit or interface configured to send information or data and an output circuit or interface configured to receive information or data.

According to a tenth aspect, a communication system is provided, including one or more of the terminal device and the access network device above. Optionally, the communication system may further include another device that communicates with the terminal device and/or the access network device.

## BRIEF DESCRIPTION OF DRAWINGS

FIG. 1 is an example diagram of an application scenario according to an embodiment of this application;
FIG. 2 is a schematic flowchart of a mechanism in which a plurality of PRACH transmissions is sent according to an embodiment of this application;
FIG. 3 is an example interaction diagram of a communication method according to an embodiment of this application;
FIG. 4 is an example diagram of a transmission resource for a plurality of PRACH transmissions according to an embodiment of this application;
FIG. 5 is another example diagram of a transmission resource for a plurality of PRACH transmissions according to an embodiment of this application;
FIG. 6 is still another example diagram of a transmission resource for a plurality of PRACH transmissions according to an embodiment of this application;
FIG. 7 is yet another example diagram of a transmission resource for a plurality of PRACH transmissions according to an embodiment of this application;
FIG. 8 is another example diagram of a transmission resource for a plurality of PRACH transmissions according to an embodiment of this application;
FIG. 9 is yet another example diagram of a transmission resource for a plurality of PRACH transmissions according to an embodiment of this application;
FIG. 10 is a schematic block diagram of a communication apparatus according to an embodiment of this application;
FIG. 11 is another schematic block diagram of a communication apparatus according to an embodiment of this application; and
FIG. 12 is a schematic structural diagram of an access network device according to an embodiment of this application.

## DESCRIPTION OF EMBODIMENTS

The technical solutions in embodiments of this application are described below with reference to the drawings.
In embodiments of this application, "a plurality of" may be understood as "at least two"; and "a plurality of items" may be understood as "at least two items".
In the description of this application, unless otherwise specified, "/" indicates that associated objects are in an "or" relationship. For example, A/B may represent A or B. In this application, "and/or" indicates only an association relationship for describing associated objects and indicates that three relationships may exist. For example, A and/or B may represent that only A exists, both A and B exist, and only B exists, where A and B may be singular or plural. In addition, in the description of this application, unless otherwise stated, "a plurality of" means two or more. "At least one of the following items (pieces)" or a similar expression thereof refers to any combination of these items, including any combination of singular items (pieces) or plural items (pieces). For example, at least one of the items (pieces) of a, b, or c may represent that a, b, c, a-b, a-c, b-c, or a-b-c, where a, b, and c may be single or multiple. In addition, to clearly describe the technical solutions in embodiments of this application, terms such as "first" and "second" are used to distinguish between same objects or similar objects whose functions and purposes are basically the same. A person skilled in the art may understand that the words such as "first" and "second" do not limit a number and an execution order, and the words such as "first" and "second" are unnecessarily different.

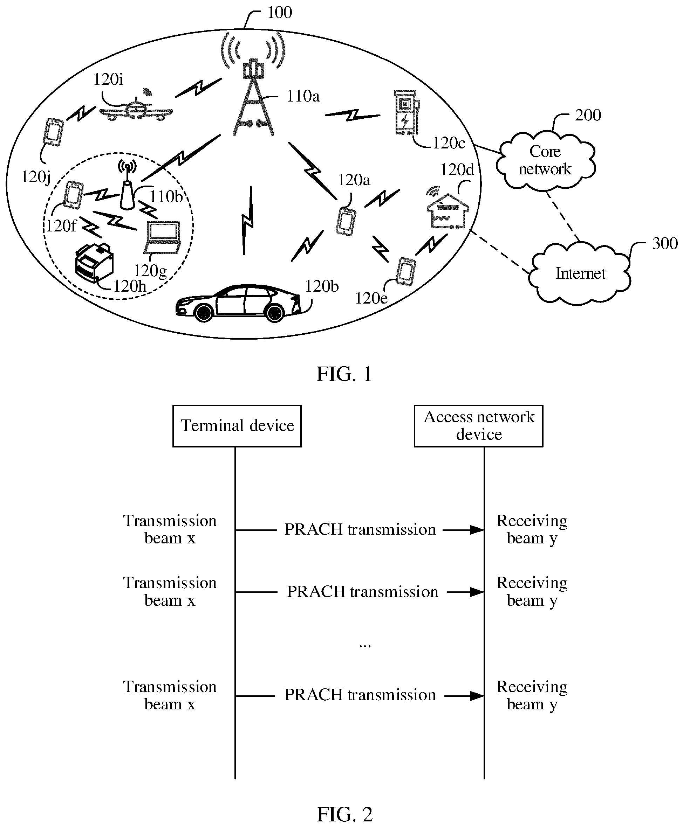

FIG. 1 is a schematic architectural diagram of a mobile communication system applicable to an embodiment of this application. As shown in FIG. 1, the communication system includes a radio access network 100 and a core network 200. The radio access network 100 may include at least one access network device (for example, 110a and 110b in FIG. 1, which are collectively referred to as 110), and may further include at least one terminal (for example, 120a to 120j in FIG. 1, which are collectively referred to as 120). The terminals 120a to 120j are connected to the access network devices 110a and 110b in a wireless manner. The access network devices 110a and 110b are connected to the core network 200 in a wireless or wired manner. The core network device in the core network and the access network device in the radio access network may be different physical devices, or may be a same physical device that integrates a logical function of the core network and a logical function of the radio access network. A wireless manner may be used for connection between terminals. A wired or wireless manner may be used for connection between access network devices. FIG. 1 is merely a schematic diagram. The communication system may further include other network devices, for example, a wireless relay device and a wireless backhaul device (which are not shown in FIG. 1). For example, the communication system may support a cellular system related to a third generation partnership project (3rd generation partnership, 3GPP) (for example, a 5G communication system, a communication system in which a plurality of wireless technologies are integrated (for example, a communication system in which at least two of 2G, 3G, 4G, or 5G technologies are integrated), or a future-oriented evolved system (for example, a 6G access technology)), a wireless fidelity (wireless fidelity, WiFi) system, a communication system in which a 3GPP-related cellular system and another technology are integrated, or a future communication system.

The access network device in this embodiment of this application may also be referred to as an access node. The access network device has a wireless transceiver function, and is configured to communicate with the terminal. The access network device includes, but is not limit to, a base station (base station), an evolved NodeB (evolved NodeB, eNodeB), a transmission reception point (transmission reception point, TRP) in the foregoing communication system, a next generation NodeB (next generation NodeB, gNB) in a 5G mobile communication system, a next generation base station in a sixth generation (6th generation, 6G) mobile communication system, an access network device or an access network device module in an open RAN (open RAN, ORAN) system, a base station in a future mobile communication system, or an access node in a Wi-Fi system. The access network device may also be a module or a unit that can implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like described below. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. The access network device may be a macro base station (for example, 110a in FIG. 1), a micro base station or an indoor station (for example, 110b in FIG. 1), a relay node or a donor node, or a radio controller in a cloud radio access network (cloud radio access network, CRAN) scenario. Optionally, the access network device may be a server, a wearable device, an on-board device, or the like. For example, an access network device in a vehicle to everything (vehicle to everything, V2X) technology may be a road side unit (road side unit, RSU). A plurality of access network devices in the communication system may be base stations of a same type, or may be base stations of different types. The base station may communicate with the terminal, or may communicate with the terminal through a relay station. The terminal may communicate with a plurality of base stations in different access technologies. A specific technology and a specific device form used by the access network device are not limited in this embodiment of this application. In this application, the access network device is referred to as a network device for short. Unless otherwise specified, the network device means the access network device in this application

The terminal may also be referred to as a terminal device, a user equipment (user equipment, UE), a mobile station, a mobile terminal, or the like. The terminal may be widely used in various communication scenarios, for example, a device-to-device (device-to-device, D2D) scenario, a vehicle to everything (vehicle to everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a remote medical scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A device form of the terminal is not limited in this embodiment of this application.

The access network device and/or the terminal may be fixed, or may be movable. The access network device and/or the terminal may be deployed on land, including indoor or outdoor, handheld or in-vehicle; or may be deployed on the water surface; or may also be deployed in an aircraft, a balloon, and a satellite in the air. Application scenarios of the access network device and the terminal are not limited in this embodiment of this application. The access network device and the terminal device may be deployed in a same scenario or different scenarios. For example, the access network device and the terminal device are simultaneously deployed on the ground. Alternatively, the access network device is deployed on the ground, the terminal device is deployed on the water surface, and the like. Examples are not provided one by one.

In an embodiment of this application, each element in the communication system may be considered as a network element in the communication system. For example, a helicopter or an unmanned aerial vehicle 120i in FIG. 1 may be configured as a mobile access network device. For a terminal device 120j that accesses the radio access network 100 through 120i, 120i is an access network device. However, for an access network device 110a, 120i is a terminal device. In other words, 110a and 120i communicate with each other through a wireless air interface protocol. 110a and 120i may also communicate with each other through an interface protocol between access network devices. In this case, compared with 110a, 120i is also the access network device. Therefore, both the access network device and the terminal device may be collectively referred to as communication apparatuses. 110a and 110b in FIG. 1 may be referred to as communication apparatuses having an access network device function, and 120a to 120j in FIG. 1 may be referred to as communication apparatuses having a terminal device function.

In this embodiment of this application, the communication apparatus having an access network device function may be an access network device, or a module (such as a chip, a chip system, or a software module) in an access network device, or a control subsystem including an access network device function. For example, the control subsystem including the access network device function may be a control center in a scenario to which the terminal is applicable, such as a smart grid, industrial control, intelligent transportation, or a smart city.

In this embodiment of this application, the communication apparatus having a terminal function may be a terminal, or a module (such as a chip, a chip system, a modem, or a software model) in a terminal, or an apparatus including a terminal function. In this embodiment of this application, for ease of description, a base station or a BS, a terminal or a UE is used as an example for description subsequently.

Communication between the access network device and the terminal device may comply with a specific protocol layer structure. In an example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, and the like. For example, the user plane protocol layer structure may include at least one of the following: a service data adaptation protocol (service data adaptation protocol, SDAP) layer, a PDCP layer, a RLC layer, an MAC layer, a physical layer, and the like.

The access network device may include the CU and the DU. The design may be referred to as separation of the CU and the DU. A plurality of DUs may be centrally controlled by one CU. For example, an interface between the CU and the DU is referred to as an F1 interface. A control plane (control panel, CP) interface may be an F1-C, and a user plane (UP) interface may be an F1-U. Specific names of the interfaces are not limited in this embodiment of this application. The CU and the DU may be divided based on protocol layers of a wireless network. For example, functions of the PDCP layer and protocol layers above (for example, the RRC layer and the SDAP layer) are set in the CU, and functions of protocol layers below the PDCP layer (for example, the RLC layer, the MAC layer, and the PHY layer) are set in the DU. For another example, functions of protocol layers above the PDCP layer are set in the CU, and functions of the PDCP layer and the protocol layers below are set in the DU. This is not limited.

The division into the processing functions of the CU and the DU based on the protocol layers is merely an example, and the division may alternatively be performed in another manner. For example, the CU or the DU may be divided to have functions having more protocol layers. For another example, the CU or the DU may be divided to have some processing functions having protocol layers. For example, some functions of the RLC layers and functions of protocol layers above the RLC layers are set in the CU, and remaining functions of the RLC layers and functions of protocol layers below the RLC layers are set in the DU. For another example, functions of the CU or the DU may be divided based on a service type or another system requirement. For example, division is performed based on a delay. A function whose processing time needs to satisfy a delay requirement is set in the DU, and a function whose processing time does not need to satisfy the delay requirement is set in the CU.

Optionally, the CU may have one or more functions of the core network.

Optionally, the radio unit (radio unit, RU) of the DU may be remotely arranged. The RU has a radio frequency function. For example, the DU and the RU may be divided at the PHY layer. For example, the DU may implement higher-layer functions of the PHY layer, and the RU may implement lower-layer functions of the PHY layer. When used for transmission, the functions of the PHY layer may include at least one of the following: cyclic redundancy check (cyclic redundancy check, CRC) bit addition, channel coding, rate matching, scrambling, modulation, layer mapping, precoding, resource mapping, physical antenna mapping, or radio frequency sending. When used for receiving, the functions of the PHY layer may include at least one of the following: CRC check, channel decoding, derate matching, descrambling, demodulation, delayer mapping, channel detection, resource demapping, physical antenna demapping, or radio frequency receiving. The higher-layer functions of the PHY layer may include a part of functions of the PHY layer, and the part of functions are closer to the MAC layer. The lower-layer functions of the PHY layer may include another part of functions of the PHY layer. For example, the part of functions is closer to the radio frequency function. For example, the high-layer functions of the PHY layer may include a CRC bit addition, channel coding, rate matching, scrambling, modulation, and layer mapping, and the low-layer functions of the PHY layer may include precoding, resource mapping, physical antenna mapping, and radio frequency sending. Alternatively, the higher-layer functions of the PHY layer may include a CRC bit addition, channel coding, rate matching, scrambling, modulation, layer mapping, and precoding, and the lower-layer functions of the PHY layer may include resource mapping, physical antenna mapping, and radio frequency sending. For example, the higher-layer functions of the PHY layer may include CRC check, channel decoding, derate matching, decoding, demodulation, and delayer mapping, and the lower-layer functions of the PHY layer may include channel detection, resource demapping, physical antenna demapping, and radio frequency receiving. Alternatively, the higher-layer functions of the PHY layer may include CRC check, channel decoding, derate matching, decoding, demodulation, delayer mapping, and channel detection, and the lower-layer functions of the PHY layer may include resource demapping, physical antenna demapping, and radio frequency receiving.

Optionally, functions of the CU may be further divided, and the control plane and the user plane are separated and implemented through different entities. The separated entities are respectively a control plane CU entity (namely, a CU-CP entity) and a user plane CU entity (namely, a CU-UP entity). The CU-CP entity and the CU-UP entity may respectively be connected to the DU. In this embodiment of this application, the entity may be understood as a module or a unit, and an existence form of the entity may be a hardware structure, a software module, or a hardware structure plus a software module. This is not limited.

Optionally, any one of the CU, CU-CP, CU-UP, DU, and RU above may be a software module, a hardware structure, or a software module and a hardware structure. This is not limited. Existence forms of different entities may be the same, or may be different. For example, the CU, the CU-CP, and the CU-UP and the DU are software modules, and the RU is a hardware structure. For brevity of description, all possible combination forms are not enumerated herein. These modules and methods for performing the modules also fall within the protection scope of embodiments of this application. For example, when the method in embodiments of this application is performed by the access network device, the method may be specifically performed by at least one of the CU, the CU-CP, the CU-UP, the DU, or the RU.

To facilitate understanding of embodiments of this application, terms involved in this application are first briefly described. Optionally, for explanations of some terms, reference may also be made to explanations in the third generation partnership project (3rd generation partnership project, 3GPP) standard protocol.

1. Preamble (Preamble) sequence: It is a random access sequence carried in a random access signal sent by the terminal in a random access process. The random access signal is also referred to as a message 1 (Message 1, Msg 1).

In an NR, each cell has 64 preambles, a preamble sequence set includes a root sequence and a cyclic shift sequence generated through the root sequence, and a calculation process may be divided into two steps. (a) A ZC (Zadoff-Chu) root sequence $x_u(n)$ is generated, which is used as a reference sequence. (b) Cyclic shift is performed on a reference sequence $x_u(n)$, to generate 63 different cyclic sequences $x_{uv}(n)$. If less than 63 shift sequences are obtained based on the reference sequence in (b), (a) is performed again, and a next reference sequence and a shift sequence corresponding to a new reference sequence are generated until 64 preamble sequences are satisfied.

The ZC sequence may be generated through the following relationships. A relationship (1) is applicable to a case in which N is an even number, and a relationship (2) is applicable to a case in which N is an odd number:

$$x_u(n) = e^{-j\frac{u\pi n^2}{N}}, 0 \leq n \leq N \quad (1)$$

$$x_u(n) = e^{-j\frac{u\pi n(n+1)}{N}}, 0 \leq n \leq N \quad (2)$$

2. Random access channel occasion (random access channel occasion, RO): It may be understood as a time-frequency resource that may be used by the terminal in the random access process. Each RO is formed by several orthogonal frequency division multiplexing (orthogonal frequency division multiplexing, OFDM) symbols in a time domain and several sub-carriers in a frequency domain. Generally, one transmission of PRACH transmission may be performed in one RO, or a part of signals in PRACH transmission may be transmitted, or a plurality of PRACH transmissions may be transmitted. This is not specifically limited in embodiments of this application.

3. 4-step random access process: It is a random access process. The 4-step random access process may generally include the following steps. Step 0: An access network device configures a random access resource to a terminal device. Step 1: A terminal device selects a suitable random access resource to send a random access signal (for example, an Msg 1), and the random access signal carries a random access sequence. Step 2: The access network device replies a random access response (random access response, RAR) message to the terminal device, and the RAR may also be referred to as a message 2 (Message 2, Msg 2). Step 3: The terminal device sends a message 3 (Message 3, Msg 3) to the access network device. Step 4: The access network device sends a message 4 (Message 4, Msg 4) to the terminal device.

Embodiments of this application provides a communication method, and the communication method is applied to the random access process. To improve a success rate of the random access, physical random access channel (physical random access channel, PRACH) transmission needs to be enhanced to improve signal coverage. A manner of physical random access channel (physical random access channel, PRACH) enhancement is to send a plurality of PRACH transmissions on a same beam during a random access attempt.

A mechanism for the terminal device to send the plurality of PRACH transmissions is described below with reference to FIG. 2. As shown in FIG. 2, the terminal device repeatedly sends the plurality of PRACH transmissions on a same transmission beam (Tx beam) x. For the access network device, the access network device may perform reception on a same receiving beam (Rx Beam) y, so as to combine and receive the received plurality of PRACH transmissions, thereby improving a signal to interference plus noise ratio (SINR) of the random access signal, to improve a probability of correct reception of the random access signal.

The terminal device may send the random access sequence (Preamble) once or repeatedly send the random access sequence (Preamble) for a plurality of times during each PRACH transmission. The access network device may also receive the random access sequence sent by the terminal device on a different receiving beam (Rx Beam). For a same description herein, the random access sequence may also have another name, for example, a random access preamble sequence, a random access preamble, or a preamble sequence.

Sending the plurality of PRACH transmissions on a same beam needs to redesign a PRACH transmission resource structure. In view of this, in the communication method provided in this embodiment of this application, a resource structure applied to the plurality of PRACH transmissions is designed. In one aspect, the terminal device can send a random access signal for a plurality of times. In another aspect, the access network device may identify the random access signal sent by the same terminal device for a plurality of times, so as to combine and receive the plurality of PRACH transmissions during a random access attempt.

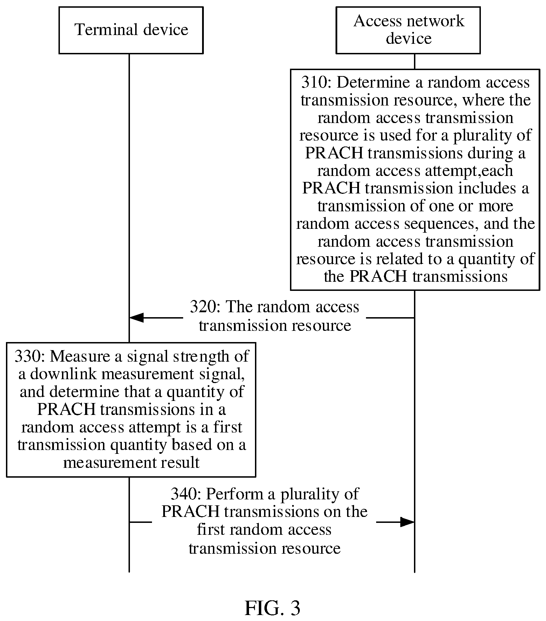

A communication method in embodiments of this application is described below with reference to FIG. 3 to FIG 9.

Refer to FIG. 3. FIG. 3 is a schematic signaling interaction diagram of a communication method according to an embodiment of this application.

It may be understood that the terminal device in FIG. 3 may be the terminal device (for example, the terminal device 120) in FIG. 1, or may refer to an apparatus (for example, a processor, a chip, or a chip system) in the terminal device. The access network device may be the access network device 110 in FIG. 1, or may be an apparatus (for example, a processor, a chip, or a chip system) in the access network device.

It may be further understood that some or all of the information interacted between the terminal device and the access network device in FIG. 3 may be carried in an existing message, channel, signal, or signaling, or may be a newly defined message, channel, signal, or signaling. This is not specifically limited. As shown in FIG. 3, the method includes the following steps.

Step 310: The access network device determines a random access transmission resource, where the random access transmission resource is used for a plurality of PRACH transmissions during a random access attempt, each PRACH transmission includes transmission of one or more random access sequences (or a Preamble sequence or a preamble sequence), and the random access transmission resource is related to a quantity of the PRACH transmissions.

The quantity of PRACH transmissions is a transmission quantity of a plurality of PRACH transmissions. In other words, the quantity of PRACH transmissions refers to a quantity of the plurality of PRACH transmissions sent by the terminal device during a random access attempt (random access attempt). Therefore, the access network device needs to pre-allocate a random access transmission resource for the plurality of PRACH transmissions, so that the terminal device sends the plurality of PRACH transmissions on the corresponding random access transmission resource, and the access network device may identify or distinguish the plurality of PRACH transmissions sent by different terminal devices.

Optionally, the random access transmission resource used by the plurality of PRACH transmissions may include a plurality of RO resources. The plurality of RO resources may be consecutive or non-consecutive in a time domain.

Optionally, the plurality of RO resources may be time-frequency resources of one PRACH period, or may be time-frequency resources dispersed in different PRACH periods. In a case of time-frequency resources dispersed in different PRACH periods, time-domain positions at each PRACH period may be the same or may be different. Details are described below with reference to the drawings.

In this embodiment of this application, the access network device may divide the transmission resources for the plurality of PRACH transmissions based on different factors. For example, the access network device divides different random access transmission resources based on different quantity of the PRACH transmissions. For another example, the access network device divides different random access resources based on different random access sequences.

In an example, the random access transmission resource includes a first random access transmission resource and a second random access transmission resource, the first random access transmission resource is used for a first transmission quantity of PRACH transmissions, and the second random access transmission resource is used for a second transmission quantity of PRACH transmissions.

It may be understood that a for description is provided by using the first random access transmission resource and the second random access transmission resource are used as an example herein. The access network device may determine a relationship between a plurality of sets of random access transmission resources and corresponding quantity of the PRACH transmissions.

After determining the structure of the random access transmission resource, the access network device may broadcast the structure of the random access transmission resource to the terminal device through a broadcast message.

Step 320: The access network device sends the random access transmission resource through the broadcast message.

Optionally, the broadcast message is in a system information block (system information block, SIB).

In an example, step 320 may be step 0 in the random access process.

Step 330: The terminal device measures a signal quality strength of a downlink measurement signal, and determines that a quantity of PRACH transmissions in a random access attempt is a first transmission quantity based on a measurement result.

Optionally, the downlink measurement signal is a synchronization signal block (synchronization signal block, SSB).

Optionally, the terminal device may measure any one of the following parameters to determine the signal strength of the SSB: a reference signal received power (reference signal received power, RSRP), an SINR, a reference signal received quality (reference signal received quality, RSRQ), and a received signal strength indicator (received signal strength indicator, RSSI).

Optionally, using the RSRP as an example, different RSRP intervals may correspond to different quantity of PRACH transmissions, or different random access transmission resources. In an example, an RSRP interval 1 corresponds to a quantity 1 of PRACH transmissions; and an RSRP interval 2 corresponds to a quantity 2 of PRACH transmissions, where each RSRP interval may be determined by both an upper limit value of the RSRP and a lower limit value of the RSRP.

For the terminal device, after receiving the SSB from the network device, the terminal device may measure the SSB, to obtain a signal strength of the SSB. For example, the signal strength of the SSB is represented through the RSRP. Then, the terminal device determines the corresponding quantity of the PRACH transmissions based on an RSRP interval to which the RSRP of the measured SSB belongs. Assuming that the RSRP of the SSB measured by the terminal device is a first RSRP, the quantity of the PRACH transmissions corresponding to the first RSRP is determined as the first transmission quantity.

Step 340: The terminal device performs a plurality of PRACH transmissions on the first random access transmission resource based on the first transmission quantity.

In other words, after determining that the transmission quantity is the first transmission quantity, the terminal device obtains, based on the configuration of the random access transmission resource delivered by the access network device, that the transmission resource corresponding to the first transmission quantity is the first random access transmission resource. In this case, the terminal device performs the plurality of PRACH transmissions of the first transmission quantity on the first random access transmission resource.

In an example, step 340 may be step 1 in the random access process.

In this embodiment of this application, the access network device configures a resource structure applied to the plurality of PRACH transmissions and broadcasts the configured resource structure, so that the terminal device can send a plurality of random access signals in a random access attempt. In addition, by preconfiguring the resource structure applied to the plurality of PRACH transmissions, it is ensured that the access network device and the terminal device consistently understand the resource structure for the plurality of PRACH transmissions. In this way, when the terminal device subsequently sends a random access signal, the access network device may identify the random access signal sent by the same terminal device for a plurality of times, so as to combine and receive the plurality of PRACH transmissions during a random access attempt.

The random access transmission resource for the plurality of PRACH transmissions allocated by the access network device is described in detail below. For ease of description, that the "random access transmission resource for a plurality of PRACH transmissions" is briefly referred to as a "random access transmission resource" is described below.

Manner one: The random access transmission resources are divided based on different random access sequences, and the different random access sequences correspond to different transmission resources.

Optionally, different random access sequences are related to the quantity of PRACH transmissions, and different random access sequences are associated with the RO resource. In an example, the first random access sequence corresponds to a first transmission quantity of PRACH transmissions, and the second random access sequence corresponds to a second transmission quantity of PRACH transmissions. In addition, the first transmission quantity corresponds to a first random access transmission resource, and the second transmission quantity corresponds to a second random access transmission resource. The first transmission quantity is different from the second transmission quantity. The first random access sequence and the second random access sequence are different random access sequences.

Optionally, the first random access transmission resource and the second random access transmission resource are located in a same frequency-domain resource pool.

For example, the quantity of PRACH transmissions associated with the random access sequence 1 is 2, where the quantity of PRACH transmissions being 2 corresponds to the RO resource 1; and the quantity of PRACH transmissions associated with the random access sequence 2 is 4, where the quantity of PRACH transmissions being 4 corresponds to the RO resource 2.

The foregoing correspondence between the random access sequence and the quantity of PRACH transmissions is merely an example for description. For the random access sequence, different implementations of a correspondence between the random access sequence and the quantity of PRACH transmissions exist. The correspondence may be a many-to-one correspondence, or a one-to-one correspondence.

In an optional implementation, the plurality of random access sequences may be divided into different groups, and the different groups correspond to different quantity of PRACH transmissions. For example, some examples are showed in Table 1 below.

Table 1

| Group number | Random access sequence set | Quantity of PRACH transmissions |
|---|---|---|
| First group | Random access sequence 1, random access sequence 2, and random access sequence 4 | 2 |
| Second group | Random access sequence 3 and random access sequence 6 | 4 |
| Third group | Random access sequence 5, random access sequence 7, and random access sequence 8 | 8 |

The foregoing table 1 shows an example of a correspondence between the quantity of PRACH transmissions corresponding to different random access sequences. For example, the random access sequence 1, the random access sequence 2, and the random access sequence 4 are in one group, and the quantity of PRACH transmissions corresponding to this group is 2.

It should be understood that the foregoing example in table 1 merely illustratively describes a "many-to-one correspondence" between the random access sequence and the quantity of PRACH transmissions, and this embodiment of this application is not limited thereto.

In another optional implementation, the random access sequences during the plurality of PRACH transmissions may form a random access sequence set, and each random access sequence in the set has a corresponding quantity of PRACH transmissions. In an example, the random access sequence set includes a plurality of random access sequences, and each random access sequence corresponds to one PRACH transmission.

For example, the random access sequence set includes {a random access sequence 1, a random access sequence 2, and a random access sequence 3}, where the quantity of PRACH transmissions corresponding to the random access sequence 1 is 2, the quantity of PRACH transmissions corresponding to the random access sequence 2 is 4, and the quantity of PRACH transmissions corresponding to the random access sequence 3 is 8.

Manner two: The random access transmission resource is divided based on different quantity of PRACH transmissions.

Optionally, the random access transmission resource includes a first random access transmission resource and a second random access transmission resource. The first random access transmission resource corresponds to a PRACH transmission whose transmission quantity is a first transmission quantity. The second random access transmission resource corresponds to a PRACH transmission whose transmission quantity is a second transmission quantity. For example, when the terminal device determines that the quantity of PRACH transmissions in a random access attempt (attempt) is the first transmission quantity, the terminal device performs the plurality of PRACH transmissions on the first random access transmission resource.

As described above, the random access transmission resources may be a plurality of ROs within one PRACH period (which may also be expressed as a time-frequency resource set within a same PRACH period), or may be a plurality of ROs within a plurality of PRACH periods (which may also be expressed as time-frequency resource sets within different PRACH periods).

Optionally, the plurality of ROs may be associated with one or more SSBs.

In some implementations, when the random access transmission resource is a plurality of ROs within one PRACH period, the plurality of ROs may be consecutive or non-consecutive in a time domain. This is not specifically limited in embodiments of this application.

Optionally, when the random access transmission resource is a plurality of ROs within one PRACH period, the access network device configures one or more SSBs, and maps the one or more SSBs to the plurality of ROs.

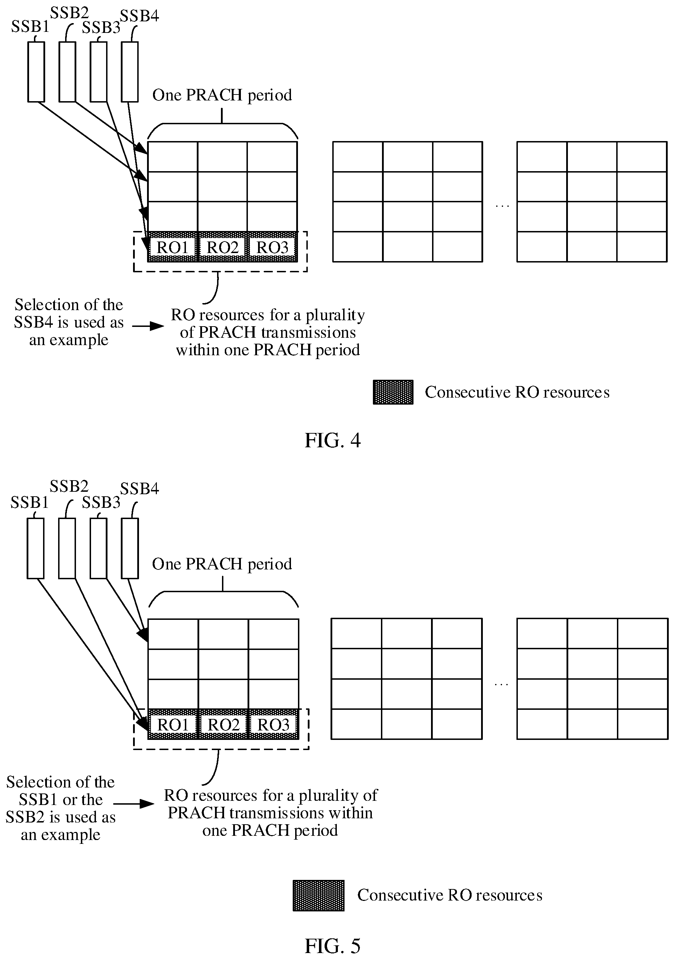

An example of a plurality of ROs within one PRACH period is described below with reference to FIG. 4. As shown in FIG. 4, for an SSB1, an SSB2, an SSB3, and an SSB4, each SSB is associated with a plurality of ROs in different frequency domains. Using the SSB4 as an example, the SSB4 is associated with the RO1, the RO2, and the RO3 within the PRACH period. The access network device may send a mapping relationship between the SSB and the RO to the terminal device through a broadcast message. For the terminal device, the terminal device selects a proper SSB based on conditions such as the measured reference signal strength of the downlink synchronization signal. Assuming that the terminal device selects the SSB4, the terminal device selects, based on the obtained mapping relationship between SSB and RO, a suitable resource from the RO1, the RO2, and the RO3 for a plurality of PRACH transmissions.

It should be understood that the RO1, the RO2, and the RO3 associated with the SSB4 shown in FIG. 4 is merely an example for description, and this embodiment of this application is not limited thereto. For example, a section of RO resource associated with the SSB4 may include more or less ROs.

It should be further understood that in FIG. 4, a description is provided by using an example in which the RO1, the RO2 and the RO3 are the consecutive RO resources, and this embodiment of this application is not limited thereto. For example, an RO resource associated with the SSB4 may include non-consecutive ROs.

It should be further understood that in FIG. 4, a description is provided by using an example in which the RO1, the RO2, and the RO3 are associated with the SSB4, and this embodiment of this application is not limited thereto. Actually, a plurality of SSBs may alternatively be mapped to a same section of RO resource.

Optionally, the plurality of SSBs may be mapped to a same RO resource within one PRACH period, and the same RO resource is dedicated to the plurality of PRACH transmissions. The same RO resource includes a plurality of ROs in a same frequency domain. A description is provided below with reference to FIG. 5.

FIG. 5 shows an example in which a plurality of SSBs are mapped to a plurality of ROs within one PRACH period. As shown in FIG. 5, an access network device may configure that an SSB1 and an SSB2 are mapped to a same RO resource (for example, an RO1, an RO2, and an RO3), and an SSB3 and an SSB4 are mapped to a same RO resource. The access network device may send, to the terminal device, the mapping relationship of mapping the plurality of SSBs to the same RO resource. For the terminal device, the terminal device selects a proper SSB based on conditions such as the measured reference signal strength of the downlink synchronization signal. Assuming that the terminal device selects the SSB1 or the SSB2, the terminal device performs a plurality of PRACH transmissions on the RO1, the RO2, and the RO3 based on the mapping relationship.

It should be understood in FIG. 5, a description is provided by using an example in which two SSBs (the SSB1 and the SSB2) are associated with the RO1, RO2, and RO3, and this embodiment of this application is not limited thereto. Actually, a larger number of SSBs may also be mapped to a same RO resource.

In some implementations, when the random access transmission resources are a plurality of ROs in a plurality of PRACH periods, time domain positions and/or frequency domain positions of the plurality of ROs in the PRACH periods are preset, and the preset time domain positions and/or the frequency domain positions in the PRACH periods may be the same or may be different. This is not specifically limited in this embodiment of this application.

Optionally, the access network device may allocate a preset ROs to each PRACH period of a plurality of PRACH periods. The ROs in each PRACH period compose a plurality of ROs, and the plurality of ROs are used for a plurality of PRACH transmissions. For the terminal device, the terminal device performs one PRACH transmission in a preset RO of each PRACH period, namely, transmits one of the plurality of PRACH transmissions in the preset RO of each PRACH period.

Optionally, the preset ROs allocated by the access network device in each PRACH period may include one or more ROs, and the one or more ROs may be associated with the SSB. In other words, the one or more SSBs may be mapped to the RO resources in different frequency domains in each PRACH period.

Optionally, when the plurality of ROs are time-frequency resources of different PRACH periods, different SSBs are mapped to ROs in different time domains and/or different frequency domains in different PRACH periods, or different SSBs are mapped to ROs in corresponding PRACH period resources having a same relative position in different PRACH periods.

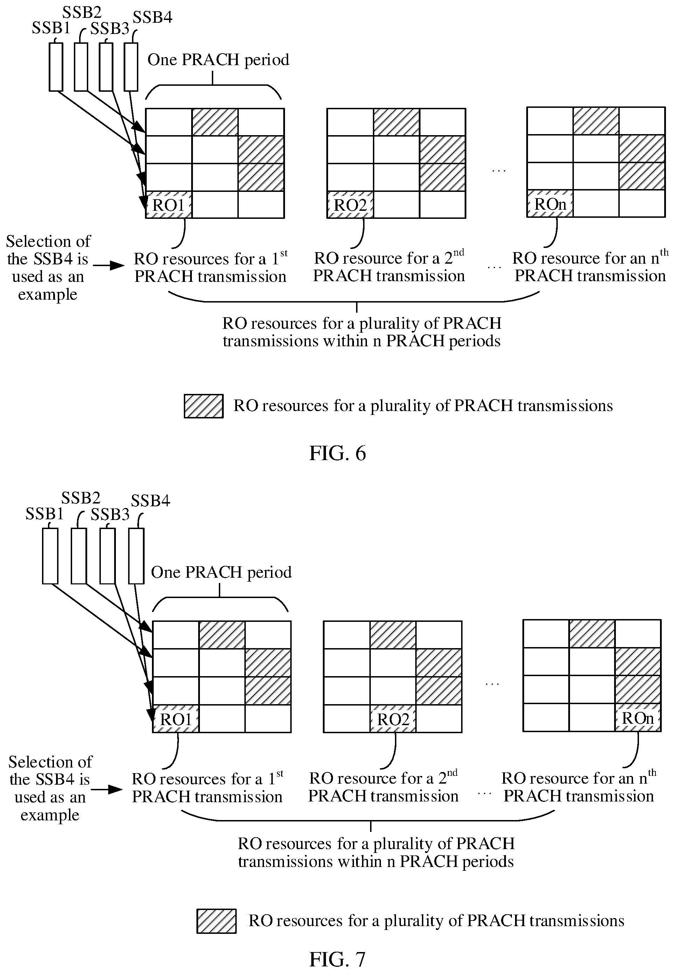

A description is provided below with reference to examples in FIG. 6 and FIG. 7.

FIG. 6 is an example diagram of ROs within a plurality of PRACH periods. As shown in FIG. 6, in a plurality of PRACH periods, for an SSB1, an SSB2, an SSB3, and an SSB4, different SSBs are associated with ROs in different frequency domains in each PRACH period, and ROs associated with the different SSBs in the different PRACH periods are at a same time domain position.

For example, a relative position between an RO mapped by the SS1 in the 1st PRACH period and an RO mapped by the SSB2 in the 1st PRACH period is the same as a relative position between an RO mapped by the SS1 in the 2nd PRACH period and an RO mapped by the SSB2 in the 2nd PRACH period.

The access network device may send the mapping relationship between the SSB and the RO in each PRACH period to the terminal device through a broadcast message. For the terminal device, the terminal device selects a proper SSB based on conditions such as the measured reference signal strength of the downlink synchronization signal. Assuming that the terminal device selects the SSB4, the terminal device performs, based on the mapping relationship, a plurality of PRACH transmissions at an RO1 in a 1st PRACH period, an RO2 in a 2nd PRACH period, ..., and an ROn in an nth PRACH period. The RO1, the RO2, ..., and the ROn have a same time-frequency position in each of the respective PRACH periods.

FIG. 7 is another example diagram of ROs within a plurality of PRACH periods. A difference between FIG. 7 and FIG. 6 lies in that time-domain positions of the RO1, the RO2, ..., and the ROn are different in the respective PRACH periods. As shown in FIG. 7, in a plurality of PRACH periods, for an SSB1, an SSB2, an SSB3, and an SSB4, different SSBs are associated with ROs in different frequency domains in each PRACH period, and ROs associated with the different SSBs in the different PRACH periods are at different time-domain positions. The access network device may send the mapping relationship between the SSB and the RO in each PRACH period to the terminal device through a broadcast message. For the terminal device, the terminal device selects a proper SSB based on conditions such as the measured reference signal strength of the downlink synchronization signal. Assuming that the terminal device selects the SSB4, the terminal device performs, based on the mapping relationship, a plurality of PRACH transmissions at an RO1 in a 1st PRACH period, an RO2 in a 2nd PRACH period, ..., and an ROn in an nth PRACH period. The RO1, the RO2, ..., and the ROn have different time-domain positions in each of the respective PRACH periods.

Optionally, the access network device may be configured with different SSBs, which are mapped to different frequency-domain positions in different PRACH periods. In this case, after determining the selected SSB based on the mapping relationship between the SSB and the RO resource, the terminal device sends a plurality of PRACH transmissions on the RO resource at different times and different frequency-domain positions in different periods.

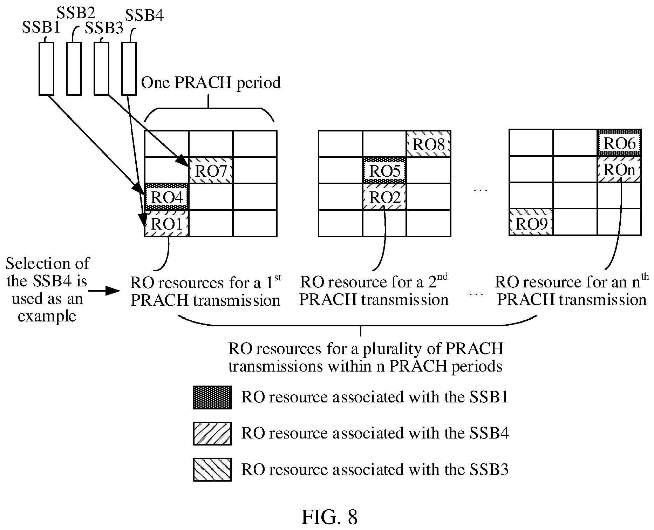

FIG. 8 is an example diagram of mapping different SSBs to different frequency-domain positions in different PRACH periods. A difference between FIG. 8 and FIG. 6 lies in that time-frequency positions of the RO1, the RO2, ..., and the ROn are different in the respective PRACH periods.

As shown in FIG. 8, in a plurality of PRACH periods, using an SSB1 and an SSB4 as an example, a same SSB is associated with ROs at different time-frequency positions in each PRACH period, and ROs associated with different SSBs in different PRACH periods are at different frequency-domain positions or may be at different time-frequency positions. The access network device may send the mapping relationship between the SSB and the RO in each PRACH period to the terminal device through a broadcast message. For the terminal device, the terminal device selects a proper SSB based on conditions such as the measured reference signal strength of the downlink synchronization signal. Assuming that the terminal device selects the SSB4, the terminal device performs, based on the mapping relationship, a plurality of PRACH transmissions at an RO1 in a 1st PRACH period, an RO2 in a 2nd PRACH period, ..., and an ROn in an nth PRACH period. The RO1, the RO2, ..., and the ROn are located on resources in different time domains and different frequency domains in different PRACH periods.

FIG. 8 further shows an example of an RO resource of another SSB configured by an access network device. Certainly, these examples are merely for ease of understanding, and do not constitute a limitation on embodiments of this application.

As shown in FIG. 8, a RO resource (for example, an RO1, an RO2, and an RO3 (when n in the figure is 3)) corresponding to an SSB1 and a RO resource (for example, an RO4, an RO5, and an RO6) corresponding to an SSB4 are located at different frequency-domain positions in different PRACH periods.

As shown in FIG. 8, an RO resource (for example, an RO7, an RO8, and an RO9) corresponding to the SSB3 and the RO resource (for example, the RO4, the RO5, and the RO6) corresponding to the SSB4 are located on resources in different frequency domains and different time domains in different PRACH periods.

It should be understood that the example in FIG. 8 is illustratively described by using the RO resources associated with the SSB1, the SSB3, and the SSB4, and this embodiment of this application is not limited thereto.

In some implementations, the foregoing random access transmission resources configured by the access network device may be parallel in a frequency domain.

Optionally, the random access transmission resource further includes a third random access transmission resource. The third random access transmission resource and the first random access transmission resource (or the second random access transmission resource) are located at different frequency-domain positions. The third random access transmission resource corresponds to a third quantity of PRACH transmissions.

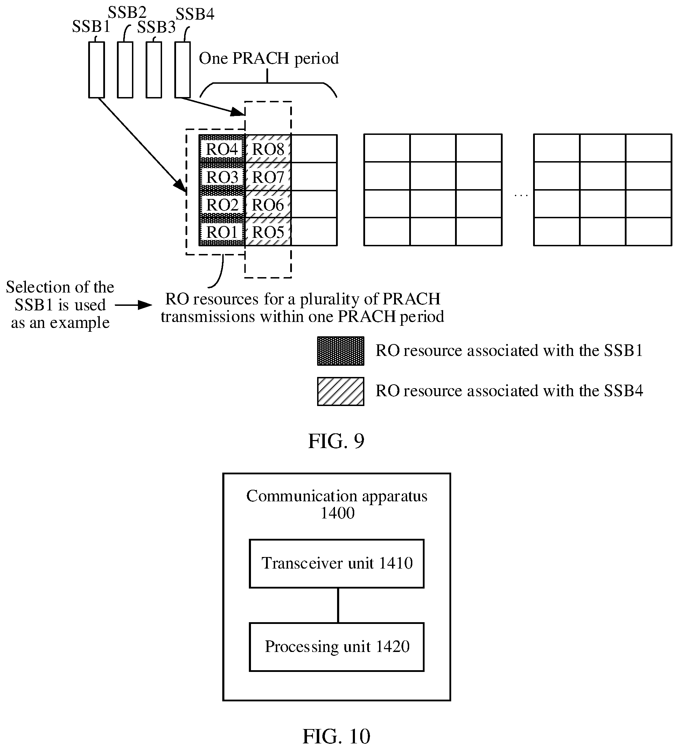

Optionally, the plurality of SSBs may be mapped to a plurality of parallel RO resources in a frequency domain within one PRACH period, and the plurality of RO resources are dedicated to a plurality of PRACH transmissions. The plurality of parallel RO resources in a frequency domain refers to a plurality of ROs located on a same time-domain resource and different frequency-domain resources. A description is provided below with reference to FIG. 9.

FIG. 9 shows an example in which a plurality of SSBs are mapped to a plurality of ROs within one PRACH period. As shown in FIG. 9, an access network device may configure that an SSB1 is mapped to an RO1, an RO2, an RO3, and an RO4, and configure that an SSB4 is mapped to a RO5, a RO6, a RO7, and a RO8. A RO resource associated with the SSB1 and a RO resource associated with the SSB4 are resources shown in FIG. 9 at different times. For the terminal device, the terminal device selects a proper SSB based on conditions such as the measured reference signal strength of the downlink synchronization signal. Assuming that the terminal device selects the SSB1, the terminal device performs, based on the mapping relationship shown in FIG. 9, a plurality of PRACH transmissions on the RO1, the RO2, the RO3, and the RO4.

It may be understood that the example shown in FIG. 9 is described by using an example in which each SSB is mapped to a list of resources in time. This is not limited in this embodiment of this application. For example, for the SSB1, the plurality of parallel RO resources in the frequency domain is the RO1, the RO2, the RO3, and the RO4.

It should be understood that FIG. 9 shows an example in which a plurality of ROs are within one PRACH period, and this embodiment of this application is not limited thereto. Actually, for a plurality of PRACH periods, a plurality of SSBs may also be configured to be mapped to a plurality of parallel RO resources in a frequency domain in a plurality of the PRACH periods.

In an example, for the plurality of PRACH periods, configured time-domain positions and/or frequency-domain positions of the plurality of ROs in each PRACH period are preset for a plurality of ROs associated with each SSB, and preset time-domain positions and/or frequency-domain positions in each of the PRACH periods may be the same or may be different. This is not specifically limited in this embodiment of this application. For example, for the plurality of parallel ROs in the frequency domain associated with the SSB1, a 1st PRACH period is on a time-domain resource 1, and a 2nd PRACH period is still on the time-domain resource 1. For another example, for the plurality of parallel ROs in the frequency domain associated with the SSB1, a 1st PRACH period is on the time-domain resource 1, and a 2nd PRACH period is still on the time-domain resource 2.

It should be understood that example diagrams of resource shown in FIG. 4 to FIG. 9 are merely for ease of understanding, and are not intended to limit embodiments of this application to the examples in the figures. Actually, a person skilled in the art may perform equivalent transformations based on the examples in FIG. 4 to FIG. 9 to obtain more implementations.

In some implementations, the random access transmission resource configured by the access network device for the terminal for a plurality of PRACH transmissions may alternatively be a shared transmission resource, or may occupy an original transmission resource, or may share a transmission resource. The shared transmission resource (or the original transmission resource) refers to a transmission resource corresponding to a random access sequence format having a relatively long duration originally occupied by the terminal device in the time domain when sending the random access sequence. Resource utilization may be improved by instructing the terminal device to perform a plurality of PRACH transmissions on the transmission resource corresponding to the first random access preamble format.

Optionally, in an implementation, the access network device sends first indication information to a terminal device, where the first indication information is used for indicating that the terminal device is allowed to perform a plurality of PRACH transmissions on a transmission resource corresponding to a first random access preamble format, and a duration occupied by the transmission resource corresponding to the first random access preamble format in a time domain exceeds a preset duration. In other words, the access network device may configure a transmission resource that occupies more than preset duration in the time domain as a plurality of PRACH transmission resources. The preset duration may be a preset time, and is used for determining a transmission resource corresponding to a random access sequence format occupying a relatively long duration.

Optionally, the access network device sends the first indication information through the broadcast message, for example, an SIB message.

In an example, it is assumed that the terminal device configures the access network device to support a random access sequence format in which random access preamble format (Format) A and Format B are mixed. In a 5G system, another Format such as Format A1, Format B1, Format A2, Format B2, Format A3, Format B3, Format A4, or Format B4 may be enabled when Format A and Format B are mixed. Random access sequences of different formats have differences in a time domain, including but not limited to the following factors: a CP length, a sequence length, and a quantity of repetition. In a format enabled by mixing Format A and Format B, Format B4 occupies the longest time in the time domain.

The access network device may configure a transmission resource corresponding to Format B4 (corresponding to the foregoing first random access preamble format) to be used as a resource for a plurality of PRACH transmissions.

The frequency band or the BWP used by the access network device to send the foregoing random access transmission resource is not specifically limited in this embodiment of this application. In some implementations, optionally, the access network device may send, in an independent BWP or an independent frequency band, the random access transmission resource in the foregoing implementations. The random access transmission resource is configured for a plurality of PRACH transmissions.

In some implementations, the random access sequence used by the terminal device when performing the plurality of PRACH transmissions may be configured by the access network device, or may be predefined by a protocol. This is not specifically limited.

Optionally, in an embodiment, the terminal device performs the plurality of PRACH transmissions on the first random access transmission resource by using the first random access sequence. The first random access sequence is configured by the access network device. Therefore, the access network device may specify a random access sequence that is used by the terminal device to perform the plurality of PRACH transmissions. When the random access transmission resource is associated with the random access sequence, the access network device may learn resources on which the terminal device performs the plurality of PRACH transmissions.

Optionally, in an embodiment, the access network device may configure the terminal device to use a same random access sequence in the plurality of PRACH transmissions. Different random access sequences may correspond to different quantity of PRACH transmissions (reference may be made to the description in the foregoing manner one). A description is provided below with reference to examples in table 2 and table 3.

**Table 2**

| Random access sequence | Quantity of PRACH transmissions |
| --- | --- |
| Preamble 1 | 2 |
| Preamble 2 | 4 |
| Preamble 3 | 8 |

As shown in the foregoing table 2, assuming that the terminal device determines that the quantity of the plurality of PRACH transmissions is 8, the terminal device selects Preamble 3 for the plurality of PRACH transmissions.

It should be noted that the example in table 2 are only for ease of understanding, and this embodiment of this application is not limited thereto. In table 2, a description is provided by using an example in which one random access sequence is associated with the quantity of PRACH transmissions. Actually, a plurality of random access sequences may be associated with a same quantity of PRACH transmissions. The plurality of random access sequences that are associated with the same quantity of PRACH transmissions are showed in Table 3 below.

**Table 3**

| Random access sequence | Quantity of PRACH transmissions |
| --- | --- |
| Preamble 1, Preamble 4, and Preamble 5 | 2 |
| Preamble 2, Preamble 6 | 4 |
| Preamble 3, Preamble 7, and Preamble 8 | 8 |

As shown in the foregoing table 3, assuming that the terminal device determines that the quantity of the plurality of PRACH transmissions is 4, the terminal device selects Preamble 2 or Preamble 6 for the plurality of PRACH transmissions. The plurality of random access sequences are associated with the same quantity of PRACH transmissions, so that collision of the terminal device during random access can be reduced.

It may be understood that the examples in table 2 or table 3 are introduced for ease of understanding, and this embodiment of this application is not limited thereto.

Optionally, in an embodiment, the access network device may configure a transmission rule of a random access sequence sent by the terminal device in a plurality of PRACH transmissions, for example, configure a different random access sequence that is used in each PRACH transmission in the plurality of PRACH transmissions. Alternatively, the access network device may send a transmission rule to the terminal device in advance, and the transmission rule agrees which random access sequence is used for which PRACH transmission.

For the terminal device, after the terminal device obtains the transmission rule configured by the access network device, the terminal device may sequentially use different random access sequences to perform the plurality of PRACH transmissions based on the transmission rule.

For example, the transmission rule may be determined in the following manner. An index of a transmission quantity of each PRACH transmission in the plurality of PRACH transmissions corresponds to a random access sequence. An illustrative description is provided below with reference to table 4.

**Table 4**

| Random access sequence | Index of quantity of PRACH transmissions |
|---|---|
| Preamble 1 | 1st |
| Preamble 2 | 2nd |
| ... | ... |
| Preamble n | nth |

The foregoing table 4 shows an example of the transmission rule. For example, based on the foregoing table 4, when the terminal device sends the PRACH transmission through Preamble 1, the access network device may learn that the received Preamble 1 is a first PRACH transmission in a plurality of PRACH transmissions.

It should be noted that the foregoing transmission rule may be sent to the terminal device by the access network device in advance, or may be defined by a protocol. This is not specifically limited. Optionally, for a situation in which the access network device sends the foregoing transmission rule, the access network device may send the foregoing transmission rule through a broadcast message.

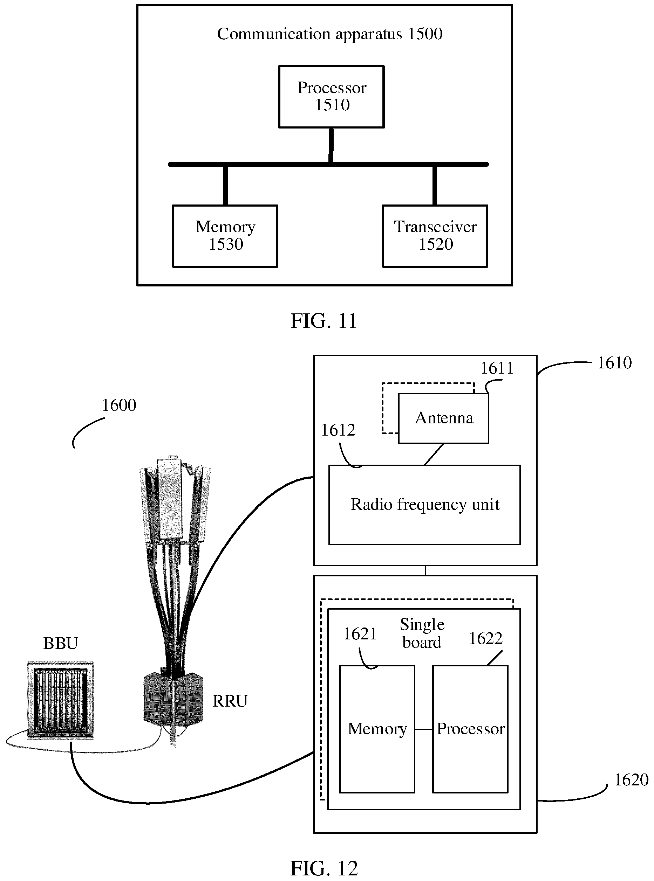

The communication method provided in embodiment of this application is described in detail below with reference to FIG. 1 to FIG 9. An apparatus embodiment of this application is described in detail below with reference to FIG. 10 and FIG. 12. It should be understood that the communication apparatus in embodiments of this application may perform various communication methods in the above embodiments of this application. In other words, for specific working processes of the following products, reference may be made to corresponding processes in the above method embodiments.

In the foregoing embodiments, the communication apparatus may perform some or all of the steps in the embodiments. These steps or operations are merely examples. In embodiments of this application, other operations or variations of various operations may be further performed. In addition, the steps may be performed in different sequences presented in various embodiments, and not all the operations in embodiments of this application may need to be performed. In addition, the sequence numbers of the operations do not mean execution sequences. The execution sequences of the processes should be determined according to functions and internal logic of the processes, and should not be construed as any limitation on the implementation processes of embodiments of this application.

FIG. 10 is a schematic block diagram of a communication apparatus according to an embodiment of this application. As shown in FIG. 10, the communication apparatus 1400 may include a transceiver unit 1410 and a processing unit 1420.

In a possible design, the communication apparatus 1400 may correspond to the access network device in the foregoing method embodiment, or a component (such as a circuit, a chip, or a chip system) configured in the access network device.

In some embodiments, the processing unit 1420 is configured to determine a random access transmission resource, where the random access transmission resource is used for a plurality of physical random access channel PRACH transmissions during a random access attempt, the random access transmission resource is related to a quantity of the PRACH transmissions, and each PRACH transmission includes a transmission of one or more random access sequences; and

the transceiver unit 1410 is configured to send the random access transmission resource.

Optionally, in an embodiment, the random access transmission resource includes a first random access transmission resource and a second random access transmission resource, the first random access transmission resource is used for a first transmission quantity of PRACH transmissions, and the second random access transmission resource is used for a second transmission quantity of PRACH transmissions.

Optionally, in an embodiment, the first transmission quantity corresponds to a first random access sequence, the second transmission quantity corresponds to a second random access sequence, and the first transmission quantity is different from the second transmission quantity.

Optionally, in an embodiment, the random access transmission resource includes a plurality of random access channel occasions ROs; and the plurality of ROs are a time-frequency resource set across a same PRACH period, or the plurality of ROs are a time-frequency resource set across different PRACH periods.

Optionally, in an embodiment, the plurality of ROs are associated with one or more SSBs; when the plurality of ROs are time-frequency resources of different PRACH periods, different SSBs are mapped to ROs in different time domains and/or different frequency domains in different PRACH periods, or different SSBs are mapped to ROs in corresponding PRACH period resources having a same relative position in different PRACH periods.

Optionally, in an embodiment, the transceiver unit 1410 is further configured to:
send first indication information to a terminal device, where the first indication information is used for indicating that the terminal device is allowed to perform a plurality of PRACH transmissions on a transmission resource corresponding to a first random access preamble format, and a duration occupied by the transmission resource corresponding to the first random access preamble format in a time domain exceeds a preset duration.

Optionally, in an embodiment, a random access sequence used by the terminal device during the plurality of PRACH transmissions is configured by the access network device.

It should be understood that the communication apparatus 1400 may correspond to an access network device in the method 200 according to embodiments of this application, and the communication apparatus 1400 may include a unit for performing the method performed by the access network device in the methods of FIG. 2 to FIG. 9. In addition, each unit in the communication apparatus 1400 and the foregoing other operations and/or functions are respectively used to implement a corresponding procedure performed by the access network device in the method in FIG. 2 to FIG. 9.

It should be further understood that when the communication apparatus 1400 is the access network device, the transceiver unit 1410 in the communication apparatus 1400 may be implemented by the transceiver, which may, for example, correspond to the transceiver 1520 in the communication apparatus 1500 shown in FIG. 11 or the RRU 1610 in the base station 1600 shown in FIG. 12. The processing unit 1420 in the communication apparatus 1400 may be implemented by at least one processor, and for example, may correspond to the processor 1510 in the communication apparatus 1500 shown in FIG. 11 or the BBU 1620 in the base station 1600 shown in FIG. 12.

It should be further understood that when the communication apparatus 1400 is a chip or a chip system configured in the foregoing access network device, the transceiver unit 1410 in the communication apparatus 1400 may be implemented through an input/output interface, and the processing unit 1420 in the communication apparatus 1400 may be implemented through a processor, a microprocessor, an integrated circuit, or the like integrated on the chip or the chip system.

Alternatively, in a possible design, the communication apparatus 1400 may correspond to the terminal device in the foregoing method embodiment, or a component (such as a circuit, a chip, or a chip system) configured in the terminal device.

In some embodiments, the transceiver unit 1410 is configured to obtain a random access transmission resource, where the random access transmission resource is used for a plurality of physical random access channel PRACH transmissions during a random access attempt, the random access transmission resource is related to a quantity of the PRACH transmissions, and each PRACH transmission includes a transmission of one or more random access sequences; and the random access transmission resource includes a first random access transmission resource and a second random access transmission resource, the first random access transmission resource is used for a first transmission quantity of PRACH transmissions, and the second random access transmission resource is used for a second transmission quantity of PRACH transmissions.

The processing unit 1420 is configured to measure a signal quality strength of a downlink measurement signal, and determining that a quantity of the PRACH transmissions in a random access attempt is a first transmission quantity based on a measurement result.

The transceiver unit 1410 is further configured to perform a plurality of PRACH transmissions on the first random access transmission resource based on the first transmission quantity.

Optionally, in an embodiment, the first transmission quantity corresponds to a first random access sequence, the second transmission quantity corresponds to a second random access sequence, and the first transmission quantity is different from the second transmission quantity.

Optionally, in an embodiment, that the transceiver unit 1410 is configured to perform a plurality of PRACH transmissions on the first random access transmission resource includes:

performing the plurality of PRACH transmissions on the first random access transmission resource by using the first random access sequence.

Optionally, in an embodiment, the first random access sequence used by the terminal device during the plurality of PRACH transmissions is configured by the access network device.

Optionally, in an embodiment, the first random access transmission resource includes a plurality of random access channel occasions ROs; and the plurality of ROs are a time-frequency resource set across a same PRACH period, or the plurality of ROs are a time-frequency resource set across different PRACH periods.

The transceiver unit 1410 is further configured to receive first indication information, where the first indication information is used for indicating that the terminal device is allowed to perform a plurality of PRACH transmissions on a transmission resource corresponding to a first random access preamble format, and a duration occupied by the transmission resource corresponding to the first random access preamble format in a time domain exceeds a preset duration.

It should be understood that the communication apparatus 1400 may correspond to the terminal device in the communication method according to embodiments of this application, and the communication apparatus 1400 may include a unit for performing the method performed by the terminal device in the methods of FIG. 2 to FIG. 9. In addition, each unit in the communication apparatus 1400 and the foregoing other operations and/or functions are respectively used to implement a corresponding procedure executed by the terminal device in the method in FIG. 2 to FIG. 9.

It should be further understood that when the communication apparatus 1400 is a terminal device, the transceiver unit 1410 in the communication apparatus 1400 may be implemented by a transceiver, which may, for example, correspond to the transceiver 1520 in the communication apparatus 1500 shown in FIG. 11. The processing unit 1420 in the communication apparatus 1400 may be implemented by at least one processor, which may, for example, correspond to the processor 1510 in the communication apparatus 1500 shown in FIG. 11.

It should be further understood that when the communication apparatus 1400 is the chip or the chip system configured in the foregoing terminal device, the transceiver unit 1410 in the communication apparatus 1400 may be implemented through an input/output interface, and the processing unit 1420 in the communication apparatus 1400 may be implemented through a processor, a microprocessor, an integrated circuit, or the like integrated on the chip or the chip system.

FIG. 11 is another schematic block diagram of a communication apparatus 1500 according to an embodiment of this application. As shown in FIG. 11, the communication apparatus 1500 includes a processor 1510, a transceiver 1520, and a memory 1530. The processor 1510, the transceiver 1520, and the memory 1530 communicate with each other through an internal connection path. The memory 1530 is configured to store instructions. The processor 1510 is configured to execute the instructions stored in the memory 1530, to control the transceiver 1520 to send a signal and/or receive a signal.

Optionally, the memory 1530 may include a read-only memory and a random access memory, and provide an instruction and data to the processor. A part of the memory may further include a nonvolatile random access memory. The memory 1530 may be an independent component, or may be integrated into the processor 1510.

In an implementation, the communication apparatus 1500 may correspond to the terminal device in the foregoing method embodiment, and may be configured to perform various steps and/or procedures executed by the terminal device in the foregoing method embodiments. The processor 1510 may be configured to execute the instructions stored in the memory 1530, and when the processor 1510 executes the instructions stored in the memory, the processor 1510 is configured to execute the steps and/or procedures of the foregoing method embodiments corresponding to the terminal device.

In another implementation, optionally, the foregoing communication apparatus 1500 may be the access network device in the foregoing embodiment, and may be configured to execute various steps and/or procedures executed by the access network device in the foregoing method embodiments. The processor 1510 may be configured to execute the instructions stored in the memory 1530, and when the processor 1510 executes the instructions stored in the memory, the processor 1510 is configured to execute the steps and/or procedures of the foregoing method embodiments corresponding to the access network device.

The transceiver 1520 may include a transmitter and a receiver. The transceiver 1520 may further include an antenna. One or more antennas may be arranged. The processor 1510, the memory 1530, and the transceiver 1520 may be devices integrated on different chips. For example, the processor 1510 and the memory 1530 may be integrated into a baseband chip, and the transceiver 1520 may be integrated into a radio frequency chip. The processor 1510, the memory 1530, and the transceiver 1520 may alternatively be devices integrated on a same chip. This is not limited in this application.

Optionally, the communication apparatus 1500 may be a component configured in an access network device, such as a chip, a chip system, and the like.

The transceiver 1520 may also be a communication interface, such as an input/output interface. The transceiver 1520, the processor 1510, and the memory 1530 may be integrated into a same chip, for example, integrated into a baseband chip.

FIG. 12 is a schematic structural diagram of an access network device according to embodiments of this application. For example, FIG. 12 may be a schematic structural diagram of a base station. The base station 1600 may be applied to the system shown in FIG. 1, to perform functions of a target access network device or a source access network device in the foregoing method embodiments. As shown in the figure, the base station 1600 may include one or more radio frequency units, such as a remote radio unit (remote radio unit, RRU) 1610 and one or more baseband units (BBU) (also referred to as a distributed unit (DU)) 1620.

The RRU 1610 may be referred to as a transceiver unit, and corresponds to the transceiver unit 1410 in FIG. 10. Optionally, the transceiver unit 1610 may also be referred to as a transceiver machine, a transceiver circuit, or a transceiver, and may include at least an antenna 1611 and a radio frequency unit 1612. Optionally, the transceiver unit 1610 may include a receiving unit and a sending unit. The receiving unit may correspond to a receiver (or referred to as a receiver device or a receiver circuit), and the sending unit may correspond to a transmitter (or referred to as a transmitter device or a transmitter circuit). The RRU 1610 part is mainly configured to receive and send a radio frequency signal and convert a radio frequency signal and a baseband signal, for example, to send a data packet to a terminal device. The BBU 1620 is mainly configured to perform baseband processing, control a base station, and the like. The RRU 1610 and the BBU 1620 may be physically arranged together or physically separated, namely, a distributed base station.

The BBU 1620 is a control center of the base station, or referred to as a processing unit, which may correspond to the processing unit 1420 in FIG. 10. The BBU is mainly configured to complete a baseband processing function, such as channel coding, multiplexing, modulation, and spreading. For example, the BBU (processing unit) may be configured to control the base station to perform an operation procedure related to the access network device in the foregoing method embodiments, for example, to generate the foregoing first configuration parameter information.

In an example, the BBU 1620 may include one or more single boards. The plurality of single boards may jointly support a radio access network (such as an LTE network) of a single access standard, or may separately support radio access networks (such as an LTE network, a 5G network, a 6G network, or another network) of different access standards. The BBU 1620 further includes a memory 1621 and a processor 1622. The memory 1621 is configured to store necessary instructions and data. The processor 1622 is configured to control the base station to perform a necessary action, for example, to control the base station to perform an operation procedure related to the network device in the foregoing method embodiments. The memory 1621 and the processor 1622 may serve one or more single boards. In other words, a memory and a processor may be separately arranged on each single board. Alternatively, a plurality of single boards may share a same memory and a same processor. In addition, necessary circuits may be arranged on each single board.

It should be understood that the base station 1600 shown in FIG. 12 may implement each process related to the access network device in the method embodiments in FIG. 2 to FIG. 9. Operations and/or functions of the modules in the base station 1600 are respectively used to implement corresponding procedures in the foregoing method embodiments. For details, reference may be made to description in the foregoing method embodiments. To avoid repetition, detailed descriptions are appropriately omitted herein.

The foregoing BBU 1620 may be configured to perform an action implemented inside the access network device in the foregoing method embodiment, and the RRU 1610 may be configured to perform an action that is sent or received by an access network device in the foregoing method embodiment, for example, an action of sending to a terminal device or receiving from a terminal device. For details, reference is made to the description in the foregoing method embodiments, and details are not described herein again.

Embodiments of this application further provide a processing apparatus, including a processor and an interface. The processor is configured to perform the communication method in any one of the foregoing method embodiments.

It should be understood that the foregoing processing apparatus may be one or more chips. For example, the processing apparatus may be a field programmable gate array (field programmable gate array, FPGA), an application specific integrated chip (application specific integrated chip, ASIC), a system on chip (system on chip, SoC), a central processing unit (central processing unit, CPU), a network processor (network processor, NP), a digital signal processor (digital signal processor, DSP) circuit, a micro controller unit (micro controller unit, MCU), a programmable logic device (programmable logic device, PLD), or another integrated chip.

During implementation, each step of the above method may be completed through an integrated logic circuit of hardware in the processor or an instruction in a form of software. The steps of the method disclosed in combination with embodiments of this application may be directly performed by a hardware processor, or may be performed through a combination of hardware and software modules in the processor. A software module may be deployed in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the methods in combination with hardware thereof. To avoid repetition, details are not described herein again.

It should be noted that the processor in embodiments of this application may be an integrated circuit chip, and has a signal processing capability. During implementation, steps in the foregoing method embodiments may be implemented by a hardware integrated logic circuit in the processor, or by instructions in a form of software. The foregoing processor may be a general purpose processor, a digital signal processor (DSP), an application specific integrated circuit (ASIC), a field programmable gate array (FPGA) or another programmable logic device, a discrete gate or a transistor logic device, or a discrete hardware component. The methods, the steps, and logical block diagrams that are disclosed in embodiments of this application may be implemented or performed. The general purpose processor may be a microprocessor, or the processor may be any conventional processor or the like. The steps of the methods disclosed with reference to embodiments of this application may be directly performed and completed through a hardware decoding processor, or may be performed and completed through a combination of hardware and software modules in the decoding processor. A software module may be deployed in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the methods in combination with hardware thereof.

It may be understood that the memory in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. Through illustrative but not limited description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memories of the system and the method described herein are intended to include, but are not limited to, these and any other suitable types of memories.

According to the method provided in embodiments of this application, this application further provides a computer program product. The computer program product includes computer program code. When the computer program code runs on a computer, the computer is enabled to perform the method in any one of the embodiments or foregoing shown in FIG. 3.

According to the method provided in embodiments of this application, this application further provides a computer-readable storage medium. The computer-readable storage medium stores program code. When the program code runs on a computer, the computer is enabled to perform the method in any one of embodiments or foregoing shown in FIG. 3.

The computer-readable storage medium may be a volatile memory or non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. Through illustrative but not limited description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

According to the method provided in embodiments of this application, this application further provides a communication system, including one or more of the foregoing terminal devices and the access network devices.

Optionally, the communication system may further include another device that communicates with the terminal device and/or the access network device.

All or some of the foregoing embodiments may be implemented by using software, hardware, firmware, or any combination thereof. When embodiments are implemented by using software, all or some of the embodiments may be implemented in a form of a computer program product. The computer program product includes one or more computer instructions. When the computer program instructions are loaded and executed on a computer, processes or functions in embodiments of this application are all or partially generated. The computer may be a general purpose computer, a dedicated computer, a computer network, or any other programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, wireless or microwave) manner. The computer-readable storage medium may be any usable medium that may be accessed by the computer, or a data storage device such as a server or a data center in which one or more usable mediums are integrated. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

The terminal device and the access network device in the foregoing apparatus embodiments correspond to the terminal device and the access network device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, reference may be made to a corresponding method embodiment. One or more processors may be provided.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in the figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. For example, the components may communicate through a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, with reference to the examples described in embodiments disclosed in this specification, units and algorithm steps can be implemented by electronic hardware or a combination of computer software and electronic hardware. Whether the functions are executed by hardware or software depends on specific applications and design constraint conditions of the technical solutions. A person skilled in the art may use different methods to implement the described functions for each particular application, but it is not considered that such implementation goes beyond the scope of this application.

A person skilled in the art can clearly understand that, for convenience and conciseness of description, for specific working processes of the above system, apparatus, and units, reference may be made to the corresponding processes in the above method embodiments. Details are not described herein.

It should be understood from the embodiments provided in this application that the disclosed system, apparatus, and method may be implemented in another manner. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic, mechanical, or another form.

The units described as separate components may or may not be physically separated, and the components displayed as units may or may not be physical units, and may be located in one place or may be distributed over a plurality of network units. Some or all of the units may be selected based on actual demands to achieve the objectives of the solutions of the embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

It should be understood that sequence numbers of the processes in embodiments of this application do not mean execution sequences. The execution sequences of the processes should be determined based on functions and internal logic of the processes, and should not be construed as any limitation on the implementation processes of embodiments of this application.

In addition, the terms "system" and "network" may be used interchangeably in this specification.

The terms (or numbers) such as "first" and "second" occurring in embodiments of this application are used merely for the purpose of description, namely, merely used for distinguishing between different objects such as different "transmission quantity", and shall not be understood as an indication or implication of relative importance or implicit indication of the number of indicated technical features. Therefore, a feature defined by "first" or "second" may explicitly or implicitly include one or more features. In the descriptions of embodiments of this application, "at least one (item)" means one or more. "A plurality of" means two or more than two. "At least one (item) of the following items" or a similar expression thereof refers to any combination of these items, including one (item) or any combination of a plurality of (items).

For example, In this embodiment of this application, unless otherwise specified, an expression such as "an item includes at least one of the following: A, B, and C", unless otherwise specified, usually means that the item can be any of the following: A; B; C; A and B; A and C; B and C; A, B, and C; A and A; A, A, and A; A, A, and B; A, A and C, A, B and B; A, C, and C; B and B, B, B and B, B, B and C, C and C; C, C, and C, and other combinations of A, B, and C. 3 elements of A, B, and C are used as an example above to illustrate the optional items of the project. When expressed as "the project includes at least one of the following: A, B, ..., and X", namely, when more elements exist in the expression, the items applicable to the project can also be obtained according to the foregoing rule.

Based on the above, the foregoing descriptions are merely preferred embodiments of the technical solutions of this application, but are not intended to limit the protection scope of this application. Any modification, equivalent replacement, or improvement made without departing from the spirit and principle of this application shall fall within the protection scope of this application.

## Claims

1. A communication method, applicable to an access network device, the method comprising:

   determining a random access transmission resource, wherein the random access transmission resource is used for a plurality of physical random access channel PRACH transmissions during a random access attempt, the random access transmission resource is related to a quantity of the PRACH transmissions, and each PRACH transmission comprises a transmission of one or more random access sequences; and
   sending the random access transmission resource.

2. The method according to claim 1, wherein the random access transmission resource comprises a first random access transmission resource and a second random access transmission resource, the first random access transmission resource is used for a first transmission quantity of PRACH transmissions, and the second random access transmission resource is used for a second transmission quantity of PRACH transmissions.

3. The method according to claim 2, wherein the first transmission quantity corresponds to a first random access sequence, the second transmission quantity corresponds to a second random access sequence, and the first transmission quantity is different from the second transmission quantity.

4. The method according to any one of claims 1 to 3, wherein the random access transmission resource comprises a plurality of random access channel occasions ROs; and the plurality of ROs are a time-frequency resource set within a same PRACH period, or the plurality of ROs are a time-frequency resource set across different PRACH periods.

5. The method according to claim 4, wherein the plurality of ROs are associated with one or more SSBs; when the plurality of ROs are time-frequency resources of different PRACH periods, different SSBs are mapped to ROs in different time domains and/or different frequency domains in different PRACH periods, or different SSBs are mapped to ROs in corresponding PRACH period resources having a same relative position in different PRACH periods.

6. The method according to any one of claims 1 to 5, further comprising:
   sending first indication information to a terminal device, wherein the first indication information is used for indicating that the terminal device is allowed to perform a plurality of PRACH transmissions on a transmission resource corresponding to a first random access preamble format, and a duration occupied by the transmission resource corresponding to the first random access preamble format in a time domain exceeds a preset duration.

7. The method according to any one of claims 1 to 6, a random access sequence used by the terminal device during the plurality of PRACH transmissions is configured by the access network device.

8. A communication method, applicable to a terminal device, the method comprising:

   obtaining a random access transmission resource, wherein the random access transmission resource is used for a plurality of physical random access channel PRACH transmissions during a random access attempt, the random access transmission resource is related to a quantity of the PRACH transmissions, and each PRACH transmission comprises a transmission of one or more random access sequences; and the random access transmission resource comprises a first random access transmission resource and a second random access transmission resource, the first random access transmission resource is used for a first transmission quantity of PRACH transmissions, and the second random access transmission resource is used for a second transmission quantity of PRACH transmissions;
   measuring a signal quality strength of a downlink measurement signal, and determining that a quantity of the PRACH transmissions in a random access attempt is a first transmission quantity based on a measurement result; and

performing a plurality of PRACH transmissions on the first random access transmission resource based on the first transmission quantity.

9.  The method according to claim 8, wherein the first transmission quantity corresponds to a first random access sequence, the second transmission quantity corresponds to a second random access sequence, and the first transmission quantity is different from the second transmission quantity.

10. The method according to claim 9, wherein the performing a plurality of PRACH transmissions on the first random access transmission resource comprises:

performing the plurality of PRACH transmissions on the first random access transmission resource by using the first random access sequence.

11. The method according to claim 10, wherein the first random access sequence used by the terminal device during the plurality of PRACH transmissions is configured by the access network device.

12. The method according to any one of claims 8 to 10, wherein the first random access transmission resource comprises a plurality of random access channel occasions ROs; and the plurality of ROs are a time-frequency resource set within a same PRACH period, or the plurality of ROs are a time-frequency resource set across different PRACH periods.

13. The method according to any one of claims 8 to 12, further comprising:

receiving first indication information, wherein the first indication information is used for indicating that the terminal device is allowed to perform a plurality of PRACH transmissions on a transmission resource corresponding to a first random access preamble format, and a duration occupied by the transmission resource corresponding to the first random access preamble format in a time domain exceeds a preset duration.

14. A communication apparatus, comprising a unit configured to implement the method according to any one of claims 1 to 7, or a unit configured to implement the method according to any one of claims 8 to 13.

15. A communication apparatus, comprising:

a processor, configured to execute computer instructions stored in a memory, so that the apparatus performs the method according to any one of claims 1 to 7 or the method according to any one of claims 8 to 13.

16. A computer-readable storage medium, having a computer program stored therein,

wherein the computer program, when executed by a processor, enables the processor to perform the method according to any one of claims 1 to 7, or enables the processor to perform the method according to any one of claims 8 to 13.

FIG. 1

FIG. 2

| Terminal device | | Access network device |
|---|---|---|

310: Determine a random access transmission resource, where the random access transmission resource is used for a plurality of PRACH transmissions during a random access attempt,each PRACH transmission includes a transmission of one or more random access sequences, and the random access transmission resource is related to a quantity of the PRACH transmissions

320: The random access transmission resource

330: Measure a signal strength of a downlink measurement signal, and determine that a quantity of PRACH transmissions in a random access attempt is a first transmission quantity based on a measurement result

340: Perform a plurality of PRACH transmissions on the first random access transmission resource

FIG. 3

One PRACH period

SSB1 SSB2 SSB3 SSB4

RO1 RO2 RO3

Selection of the SSB4 is used as an example → RO resources for a plurality of PRACH transmissions within one PRACH period

■ Consecutive RO resources

FIG. 4

One PRACH period

SSB1 SSB2 SSB3 SSB4

RO1 RO2 RO3

Selection of the SSB1 or the SSB2 is used as an example → RO resources for a plurality of PRACH transmissions within one PRACH period

■ Consecutive RO resources

FIG. 5

RO resources for a plurality of PRACH transmissions

FIG. 6

RO resources for a plurality of PRACH transmissions

FIG. 7

FIG. 8

SSB2
SSB1  SSB3  SSB4

One PRACH period

| RO4 | RO8 |  |
| RO3 | RO7 |  |
| RO2 | RO6 |  |
| RO1 | RO5 |  |

Selection of the
SSB1 is used ⟶ RO resources for a plurality of PRACH
as an example   transmissions within one PRACH period

▓ RO resource associated with the SSB1

▨ RO resource associated with the SSB4

FIG. 9

Communication apparatus
1400

Transceiver unit 1410

Processing unit 1420

FIG. 10

Communication apparatus 1500

Processor
1510

Memory
1530

Transceiver
1520

FIG. 11

1610

1611

Antenna

1612

Radio frequency unit

1600

BBU

RRU

Single
board

1621

1622

Memory

Processor

1620

FIG. 12

## INTERNATIONAL SEARCH REPORT

| International application No. |
|---|
| **PCT/CN2023/135040** |

**A. CLASSIFICATION OF SUBJECT MATTER**

H04W74/08(2024.01)i; H04W74/00(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, CJFD, CNKI, 3GPP, ISI: 物理随机接入信道, 资源, 波束, 随机接入序列, 前导码, 尝试, 时机, 测量, 广播, PRACH, SSB, beam, preamble, attempt, RO, measure, SIB

**C. DOCUMENTS CONSIDERED TO BE RELEVANT**

| Category* | Citation of document, with indication, where appropriate, of the relevant passages | Relevant to claim No. |
|---|---|---|
| X | CN 110958712 A (BEIJING SAMSUNG TELECOM R&D CENTER et al.) 03 April 2020 (2020-04-03)<br>description, paragraphs 77-152 | 1-16 |
| A | CN 111278159 A (VIVO SOFTWARE TECHNOLOGY CO., LTD.) 12 June 2020 (2020-06-12)<br>entire document | 1-16 |
| A | CN 113747574 A (HUAWEI TECHNOLOGIES CO., LTD.) 03 December 2021 (2021-12-03)<br>entire document | 1-16 |
| A | US 2021307078 A1 (SAMSUNG ELECTRONICS CO., LTD.) 30 September 2021 (2021-09-30)<br>entire document | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 February 2024** | **20 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/135040**

| Patent document cited in search report | | | Publication date (day/month/year) | Patent family member(s) | | | Publication date (day/month/year) |
|---|---|---|---|---|---|---|---|
| CN | 110958712 | A | 03 April 2020 | KR | 20210049896 | A | 06 May 2021 |
| | | | | EP | 3841819 | A1 | 30 June 2021 |
| | | | | WO | 2020067696 | A1 | 02 April 2020 |
| | | | | US | 2022070930 | A1 | 03 March 2022 |
| CN | 111278159 | A | 12 June 2020 | WO | 2020147826 | A1 | 23 July 2020 |
| CN | 113747574 | A | 03 December 2021 | WO | 2021239113 | A1 | 02 December 2021 |
| US | 2021307078 | A1 | 30 September 2021 | EP | 3818768 | A1 | 12 May 2021 |
| | | | | WO | 2020032618 | A1 | 13 February 2020 |
| | | | | IN | 201841029871 | A | 14 February 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310187906